# FASCICULE DE BREVET EUROPEEN

(11) **EP 1 182 023 B1**
(45) Date de publication et mention de la délivrance du brevet: **09.02.2005**
(21) Numéro de dépôt: 01401917.8
(22) Date de dépôt: 18.07.2001
(51) Int. Cl.: B29C 44/14, B29C 44/44

(54) **Procédé de fabrication d'une pièce à base de polystyrène expansé destinée à supporter une charge, et pièce telle qu'obtenue par le procédé**
Verfahren zur Herstellung eines lasttragenden Teils aus expandiertem Polystyrol, und durch das Verfahren herstellbares Teil
Method of making a load carrying article of expanded polystyrene, and article as obtained by the process

(30) Priorité: 27.07.2000 FR 0009853
(43) Date de publication de la demande: 27.02.2002
(73) Titulaire: ISOBOX TECHNOLOGIES, 92024 Nanterre Cedex (FR)
(72) Inventeur: Barbarit, André, 94120 Fontenay Sous Bois (FR)
(74) Mandataire: Jacquard, Philippe Jean-Luc

(56) Documents cités:
- DE-A- 19 823 415
- GB-A- 1 314 675
- US-A- 3 717 922

## Description

La présente invention concerne un procédé de fabrication d'une pièce à base de polystyrène expansé destinée à supporter une charge, ainsi qu'une pièce ainsi obtenue.

Dans le domaine du transport, et en particulier de la palettisation, il est déjà connu d'utiliser des pièces en polystyrène expansé pour réaliser des palettes. Ces pièces sont réalisées de manière classique par moulage par injection.

De telles palettes présentent cependant l'inconvénient d'une relative fragilité aux chocs, ainsi qu'une résistance à l'abrasion et aux déchirures, qui n'est pas satisfaisante.

Il est connu du document DE-A-198 23 415 de réaliser des pièces entourées partiellement d'une couche protectrice en matériau perméable à la vapeur. Pour cela, ladite couche est introduite dans un moule d'injection et fixée à celui-ci, avant d'injecter des billes de polystyrène expansé sous pression à travers un nez d'injection.

La présente invention propose de fabriquer, sans compliquer de manière notable le procédé de fabrication, des pièces dont tout le contour, à l'exception du point d'injection des billes, est recouvert d'une couche protectrice.

L'invention concerne ainsi un procédé de fabrication tel que défini dans la revendication 1.

L'invention concerne également une pièce telle que définie dans la revendication 12.

Des modes de réalisation préférés de l'invention sont définis dans les revendications dépendantes 2 à 11 et 13 à 16.

D'autres caractéristiques et avantages de l'invention seront mieux compris à la lecture de la description qui va suivre, en liaison avec les dessins annexés, dans lesquels :
- les figures 1a à 1f illustrent les étapes d'une mise en oeuvre préférée du procédé ;
- les figures 2a à 2c représentent respectivement en vue de dessus, en coupe AA et en coupe BB, une palette selon l'invention,
- et la figure 3 illustre le moulage d'une palette selon les figures 2a à 2c.

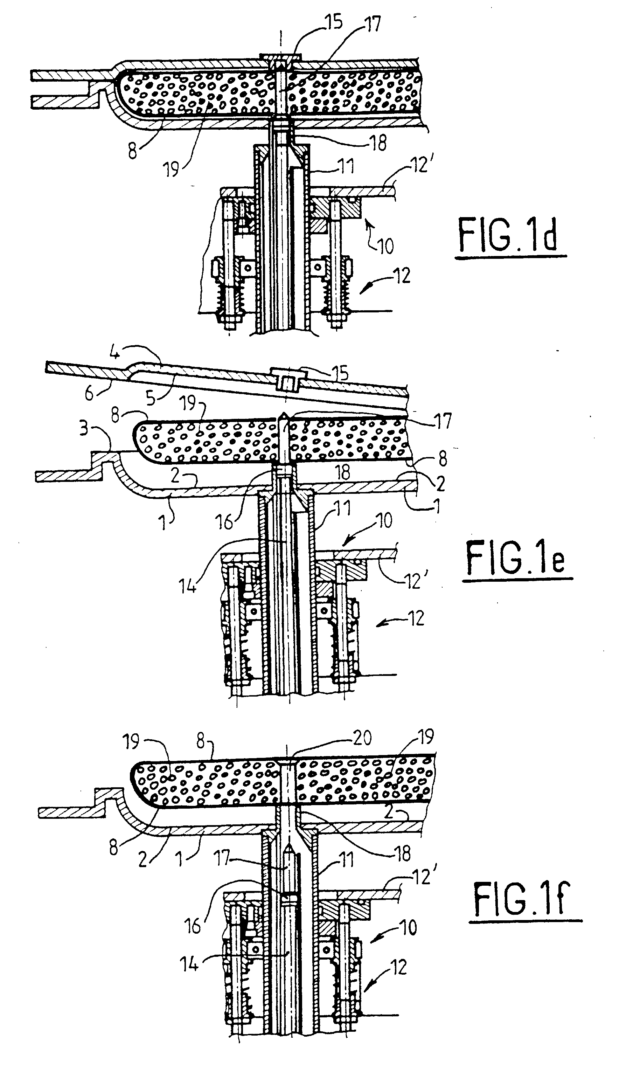

Comme le montrent les figures 1a à 1f, un moule d'injection comporte une partie inférieure 1 présentant un contour interne 2, et qui présente au moins un nez d'injection 10 de billes porté par une platine 12' et comportant un tube cylindrique 11 d'amenée des billes à une buse 18. A l'intérieur de ce tube 11 est ménagé un tube 13 dans lequel coulisse une tige cylindrique 14 présentant à une extrémité une collerette 16 et une poinçon 17. Un ensemble de commande 12 permet de déplacer le tube 11 et la tige porte-poinçon 14. Le moule d'injection présente également un demi-moule supérieur 4 présentant un contour interne 5, les deux demi-moules 1 et 4 coopérant autour de contours de fermeture 3 et 6.

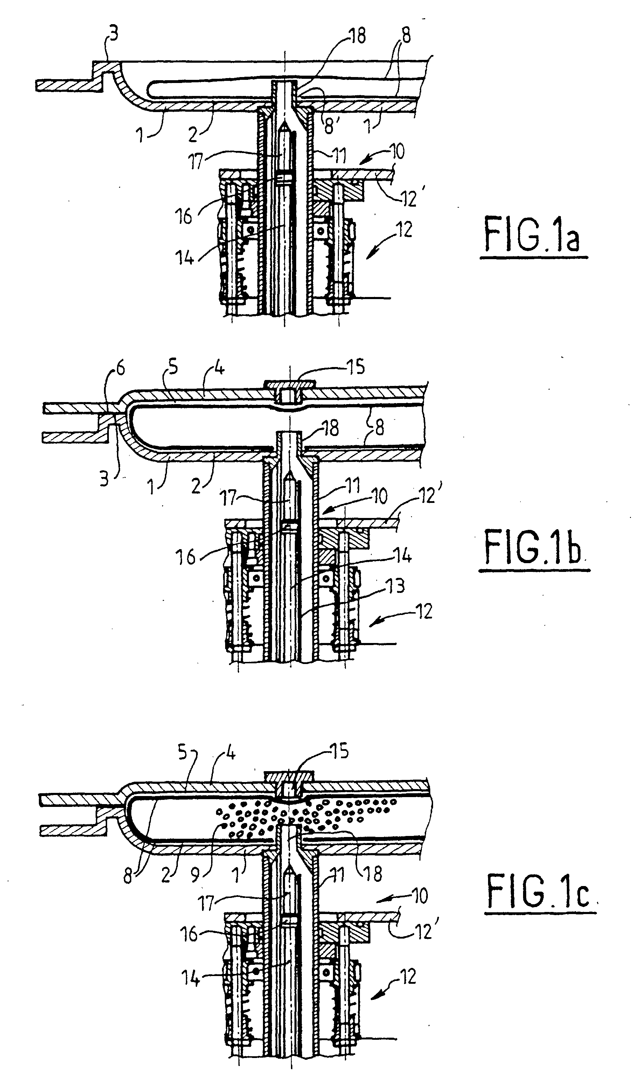

A la figure 1a, une housse 8 en textile est déposée dans le demi-moule 1 de sorte qu'une ouverture 8' de la housse 8 soit traversée par la buse 18. Le demi-moule 4 est ensuite positionné de manière à fermer au moins partiellement le moule après quoi de la vapeur est injectée dans le moule pour plaquer la housse 8 sur les parois 2 et 5 du moule (figure 1b).

L'étape suivante (figure 1c) est l'injection de billes de polystyrène expansé à travers la ou les buses 18.

Ensuite, le ou les poinçons 17, précédemment en position rétractée, sont déployés de manière à traverser la housse 8 et les billes 9 qui la garnissent, l'extrémité conique du poinçon 17 venant se loger dans un trou borgne 15 débouchant à l'intérieur du demi-moule supérieur 4, alors que les buses 18 d'injection des billes sont rétractées de manière à s'effacer dans la paroi interne 2 (figure 1d).

Une injection de vapeur sous pression est alors réalisée pour obtenir, de manière connue en soi, la prise en masse des billes 9 pour former un bloc 19 de polystyrène expansé surmoulé par la housse 8 (figure 1d). La housse étant perméable à la vapeur, celle-ci peut atteindre les billes 9 et les conditions de moulage ne sont pas ou peu modifiées par rapport à une injection classique.

On notera qu'en l'absence de mesure particulière, la housse qui entoure le bloc 19 n'est pas lié à celui-ci, ce qui fait qu'il est possible d'obtenir localement un déplacement relatif de la housse 8 et du bloc 19. On peut solidariser la housse 8 et le bloc 19 en imprégnant localement ou sur toute sa surface la housse 8 de colle thermo-réactive ("hot melt") susceptible de réagir aux environs de 80°C ou bien de polyuréthane. On obtient alors avec les conditions habituelles d'injection de vapeur (110°C-120°C), une pièce pour laquelle la housse 8 et le bloc 19 sont solidarisés.

Le démoulage s'effectue en écartant le demi-moule 4, la pièce 8, 19 étant maintenue par les poinçons 17, et en positionnant de nouveau les buses 18 en position déployée pour dégager la pièce de la paroi 2 du moule 1. Il suffit ensuite de rétracter les poinçons 17 pour que la pièce puisse être extraite.

Un avantage du procédé est qu'il ne nécessite pas d'adaptation de la forme du moule pour réaliser des pièces de même forme, avec ou sans housse. On obtient un bloc entièrement entouré par un tissu à la seule exception du point d'injection des billes, sans ligne de jonction visible, le tissu étant légèrement tendu autour du bloc, de sorte qu'il en épouse la forme.

Un avantage supplémentaire des poinçons 17 est de faciliter le refroidissement et la prise en masse, notamment lorsqu'ils traversent des régions massives telles que les plots de support 22 d'une palette.

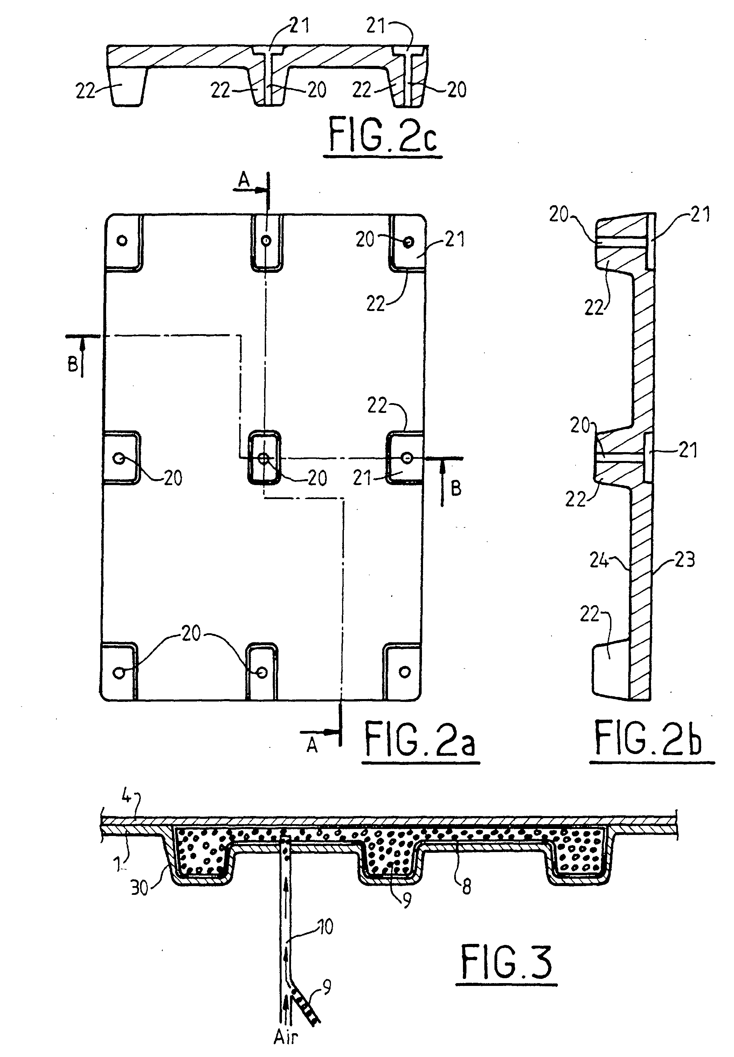

Une telle palette est représentée à titre d'exemple en relation avec les figures 2a à 2c. Elle présente deux faces planes parallèles 23 et 24, la face inférieure 24 portant des plots 22. Des évidements 21 facilitant l'empilement des palettes peuvent être ménagés dans la face supérieure 23 au droit des plots 22.

Le moule représenté à la figure 3 présente deux demi-moules 1 et 4, le demi-moule 1 présentant des régions 30 correspondant aux plots 22, ainsi qu'un ou plusieurs nez d'injection 10 de billes 9 dans la housse 8.

Le procédé se prête particulièrement bien à la réalisation de formes complexes étant donné que la seule contrainte à respecter est de ne pas dépasser les limites d'extension du tissu lors de son plaquage sur les bords internes du moule (figures 1b et 3).

En outre, le moule n'est pas nécessairement entièrement fermé. La condition à respecter est que le tissu, qui laisse passer la vapeur, soit à même de supporter dans toute zone où le moule n'est pas fermé, la pression différentielle au cours de l'injection de vapeur.

Les pièces obtenues sont plus résistantes aux chocs, à l'abrasion et aux déchirures que les pièces classiques en polystyrène expansé de même densité. En outre, le rapport résistance/poids est nettement amélioré, c'est-à-dire que pour obtenir des propriétés mécaniques équivalentes en termes de charge supportée, la densité du polystyrène peut être abaissée, d'où un gain de poids et de prix.

## Revendications

1. Procédé de fabrication d'une pièce à base de polystyrène expansé, destinée à supporter une charge, en particulier une palette, **caractérisé en ce qu'**il met en oeuvre :
a) une introduction dans un moule d'injection (1, 4) d'une housse en matériau perméable à la vapeur, avec injection à l'intérieur de la housse (8), de billes (9) de polystyrène expansé effectuée sous pression à travers au moins un nez d'injection (10) introduit dans une ouverture (8') de la housse (8) la housse longeant étroitement et sur tout son contour la paroi interne du moule,
b) une mise en température sous l'action de vapeur du moule d'injection et refroidissement pour obtenir une solidarisation entre elles des billes de polystyrène expansé pour former une pièce présentant un bloc (19) en polystyrène expansé entouré étroitement par la housse (8) dont tout le contour, à l'exception du point d'injection des billes, en épouse la forme, et un démoulage de la pièce.

2. Procédé selon la revendication 1, **caractérisé en ce qu'**il met en oeuvre une fermeture partielle du moule avant ladite injection.

3. Procédé selon la revendication 1, **caractérisé en ce qu'**il met en oeuvre une fermeture totale du moule avant ladite injection.

4. Procédé selon une des revendications 1 à 3, **caractérisé en ce que** l'étape d'injection des billes est immédiatement précédée d''une mise sous pression de la housse (8) pour la plaquer sur l'intérieur du moule (1, 4).

5. Procédé selon une des revendications précédentes, **caractérisé en ce qu'**il met en oeuvre, avant a), un pré-remplissage au moins partiel de la housse (8) par des billes (9) de polystyrène expansé.

6. Procédé selon une des revendications précédentes, **caractérisé en ce que** la housse (8) est en un matériau susceptible de supporter sans détérioration, une température supérieure d'au moins 30°C à la température atteinte par le moule (1, 4).

7. Procédé selon une des revendications précédentes, **caractérisé en ce que** la housse (8) est en polypropylène ou en polyamide tissé.

8. Procédé selon une des revendications précédentes, **caractérisé en ce qu'**il met en oeuvre une enduction de la housse (8) avec une colle thermo-réactive ou du polyuréthane qui réagit sous l'action de la vapeur d'eau lors du moulage par injection.

9. Procédé selon une des revendications précédentes, **caractérisé en ce qu'**au moins un nez d'injection (10) est équipé d'un poinçon de perçage (17) pour réaliser un passage (20) de préférence traversant à travers la pièce.

10. Procédé selon la revendication 9, **caractérisé en ce qu'**au moins un poinçon de perçage (17) est maintenu à l'intérieur de la pièce pendant au moins une partie du démoulage au moins pour dégager la pièce d'une paroi (5) opposée audit nez d'injection (10).

11. Procédé selon la revendication 10, **caractérisé en ce que** lors du démoulage, au moins un nez d'injection (10) est poussé vers l'intérieur du moule (1, 4) pour dégager la pièce de la paroi (2) dans laquelle est ménagé ledit nez d'injection (10), après quoi, le ou les poinçons de perçage (17) sont placés dans une position rétractée pour permettre la récupération de la pièce.

12. Pièce à base de polystyrène expansée destinée à supporter une charge, notamment une palette, telle qu'obtenue par le procédé selon la revendication 1, présentant un bloc (19) en polystyrène expansé entouré étroitement et sur tout son contour, à l'exception du point d'injection des billes, par une housse (8) en matériau perméable à la vapeur, notamment un tissu, qui en épouse la forme sur tout son contour, à l'exception du point d'injection des billes, sans ligne de jonction visible.

13. Pièce selon la revendication 12, **caractérisée en ce que** le tissu est un polyamide ou un polypropylène.

14. Pièce selon une des revendications 12 ou 13, **caractérisée en ce qu'**elle présente des ouvertures traversantes (20).

15. Pièce selon la revendication 14, **caractérisée en ce qu'**elle présente des plots (22) dans lesquels sont ménagées lesdites ouvertures traversantes (21).

16. Pièce selon une des revendications 12 à 15, **caractérisée en ce que** la housse (8) est au moins localement solidarisée au bloc (19) en polystyrène expansé.

## Patentansprüche

1. Verfahren zur Herstellung eines Teils auf Basis von aufgeschäumtem Polystyrol, das eine Last tragen soll, insbesondere eine Palette, **dadurch gekennzeichnet, dass** es umfasst:
a) Einlegen einer Schutzhülle aus dampfdurchlässigem Material in eine Spritzgussform (1, 4), wobei Kugeln (9) aus aufgeschäumtem Polystyrol in das Innere der Schutzhülle (8) gespritzt werden, welches Einspritzen unter Druck durch mindestens eine in eine Öffnung (8') der Schutzhülle (8) eingeführte Spritzspitze (10) erfolgt, wobei sich die Schutzhülle eng an und über den ganzen Umfang der Innenwand der Gussform entlang erstreckt,
b) Erhitzen der Spritzgussform durch Dampf und Abkühlung zum Erreichen der Verbindung der Kugeln aus aufgeschäumtem Polystyrol untereinander, damit diese einen Block (19) aus aufgeschäumtem Polystyrol bilden, der eng von der Schutzhülle (8) umgeben ist, deren ganzer Umfang, mit Ausnahme der Einspritzstelle für die Kugeln, dessen Form annimmt, und Lösen des Teils aus der Form.

2. Verfahren nach Anspruch 1, **dadurch gekennzeichnet, dass** es ein parzielles Schließen der Gussform vor dem Einspritzen umfasst.

3. Verfahren nach Anspruch 1, **dadurch gekennzeichnet, dass** es ein komplettes Schließen der Gussform vor dem Einspritzen umfasst.

4. Verfahren nach einem der Ansprüche 1 bis 3, **dadurch gekennzeichnet, dass** der Kugeleinspritzphase unmittelbar eine Druckbeaufschlagung der Schutzhülle (8) vorangeht, wodurch diese fest in das Innere der Gussform (1, 4) gedrückt werden soll.

5. Verfahren nach einem der vorstehenden Ansprüche, **dadurch gekennzeichnet, dass** es vor dem Schritt a) eine zumindest parzielle Vorbefüllung der Schutzhülle (8) mit Kugeln (9) aus aufgeschäumtem Polystyrol umfasst.

6. Verfahren nach einem der vorstehenden Ansprüche, **dadurch gekennzeichnet, dass** die Schutzhülle (8) aus einem Material besteht, das ohne Beschädigung eine Temperatur übersteht, die mindestens 30°C über der von der Gussform (1, 4) erreichten Temperatur liegt.

7. Verfahren nach einem der vorstehenden Ansprüche, **dadurch gekennzeichnet, dass** die Schutzhülle (8) aus Polypropylen oder Polyamidgewebe besteht.

8. Verfahren nach einem der vorstehenden Ansprüche, **dadurch gekennzeichnet, dass** es eine Beschichtung der Schutzhülle (8) mit einem thermoreaktiven Klebstoff oder Polyurethan umfasst, das/der unter dem Einfluss des Wasserdampfs beim Spritzgießen reagiert.

9. Verfahren nach einem der vorstehenden Ansprüche, **dadurch gekennzeichnet, dass** mindestens eine Spritzspitze (10) mit einem Lochdorn (17) versehen ist, um ein vorzugsweise das Teil durchquerendes Durchführen (20) zu bewirken.

10. Verfahren nach Anspruch 9, **dadurch gekennzeichnet, dass** zumindest während eines Teils des Lösens aus der Form mindestens ein Lochdorn (17) innerhalb des Teils gehalten wird, um das Teil zumindest von einer der Spritzspitze (10) gegenüber liegenden Wand (5) zu lösen.

11. Verfahren nach Anspruch 10, **dadurch gekennzeichnet, dass** beim Lösen aus der Form mindestens eine Spritzspitze (10) in das Innere der Gussform (1, 4) geschoben wird, um das Teil von der Wand (2) zu lösen, in der die Spritzspitze (10) gebildet ist, woraufhin der oder die Lochdorn/e (17) in einer zurückgezogenen Position gehalten werden, um das Herausnehmen des Teils zu ermöglichen.

12. Teil auf Basis von aufgeschäumtem Polystyrol, das zum Tragen einer Last, insbesondere einer Palette, vorgesehen ist, wie es durch das Verfahren nach Anspruch 1 erhalten wurde, das einen Block (19) aus aufgeschäumtem Polystyrol umfasst, der eng und auf seinem ganzen Umfang, mit Ausnahme der Einspritzstelle für die Kugeln, von der Schutzhülle (8) aus dampfdurchlässigem Material, insbesondere einem Gewebe, umgeben ist, die mit ihrem ganzen Umfang, mit Ausnahme der Einspritzstelle für die Kugeln, ohne sichtbare Verbindungsnaht dessen Form annimmt.

13. Teil nach Anspruch 12, **dadurch gekennzeichnet, dass** das Gewebe (8) ein Polyamid oder ein Polypropylen ist.

14. Teil nach einem der Ansprüche 12 oder 13, **dadurch gekennzeichnet, dass** es durchführende Öffnungen (20) aufweist.

15. Teil nach Anspruch 14, **dadurch gekennzeichnet, dass** es erhöhte Stellen (22) aufweist, in denen die durchführenden Öffnungen (21) vorgesehen sind.

16. Teil nach einem der Ansprüche 12 bis 17, **dadurch gekennzeichnet, dass** die Schutzhülle (8) zumindest stellenweise fest mit dem Block (19) aus aufgeschäumtem Polystyrol verbunden ist.

## Claims

1. Process for the manufacture of an article based on expanded polystyrene for carrying a load, especially a pallet, **characterised in that** it comprises:
a) introducing into an injection mould (1, 4) a sleeve made of a material that is permeable to steam, with the injection into the sleeve (8) of balls (9) of expanded polystyrene, the injection being carried out under pressure through at least one injection nose (10) introduced into an opening (8') in the sleeve (8), the sleeve hugging the inside wall of the mould tightly over its entire contour,
b) heating the injection mould under the action of steam and cooling it so that the balls of expanded polystyrene join together to form an article comprising a block (19) of expanded polystyrene tightly surrounded by the sleeve (8), which fits the mould exactly over its entire contour, with the exception of the ball-injection point, and removing the article from the mould.

2. Process according to claim 1, **characterised in that** it comprises partly closing the mould before said injection.

3. Process according to claim 1, **characterised in that** it comprises closing the mould completely before said injection.

4. Process according to any one of claims 1 to 3, **characterised in that**, immediately before the ball-injection step, the sleeve (8) is placed under pressure in order to flatten it against the inside of the mould (1, 4).

5. Process according to any one of the preceding claims, **characterised in that** it comprises, before a), at least partly pre-filling the sleeve (8) with balls (9) of expanded polystyrene.

6. Process according to any one of the preceding claims, **characterised in that** the sleeve (8) is made of a material capable of withstanding, without deterioration, a temperature that is at least 30°C higher than the temperature reached by the mould (1, 4).

7. Process according to any one of the preceding claims, **characterised in that** the sleeve (8) is made of woven polypropylene or polyamide.

8. Process according to any one of the preceding claims, **characterised in that** it comprises coating the sleeve (8) with a hot-melt adhesive or with polyurethane which reacts under the action of the steam during the injection moulding.

9. Process according to any one of the preceding claims, **characterised in that** at least one injection nose (10) is equipped with a piercing punch (17) for producing a passage (20) which preferably passes right through the article.

10. Process according to claim 9, **characterised in that** at least one piercing punch (17) is maintained inside the article during at least part of the operation of removing the article from the mould in order to free the article from a wall (5) opposite said injection nose (10).

11. Process according to claim 10, **characterised in that**, during the operation of removing the article from the mould, at least one injection nose (10) is pushed towards the inside of the mould (1, 4) in order to free the article from the wall (2) in which said injection nose (10) is formed, following which the piercing punch or punches (17) is/are placed in a retracted position in order to allow the article to be recovered.

12. Article based on expanded polystyrene for carrying a load, especially a pallet, as obtained by the process according to claim 1, comprising a block (19) of expanded polystyrene tightly surrounded over its entire contour, with the exception of the ball-injection point, by a sleeve (8) made of a material that is permeable to steam, especially a woven material, which fits the shape of the block exactly over its entire contour, with the exception of the ball-injection point, without any visible joining line.

13. Article according to claim 12, **characterised in that** the woven material is a polyamide or a polypropylene.

14. Article according to either claim 12 or claim 13, **characterised in that** it has through-openings (20).

15. Article according to claim 14, **characterised in that** it has studs (22) in which said through-openings (21) are formed.

16. Article according to any one of claims 12 to 15, **characterised in that** the sleeve (8) is joined at least locally to the block (19) of expanded polystyrene.
